# DEMANDE DE BREVET EUROPEEN

(11) **EP 4 557 131 A1**
(43) Date de publication de la demande: **21.05.2025**
(21) Numéro de dépôt: 24213076.3
(22) Date de dépôt: 14.11.2024
(51) Int. Cl.: G06F 21/16, G06N 3/08

(54) **PROCÉDÉ ET DISPOSITIF DE TATOUAGE DE MODÈLE DE SEGMENTATION SÉMANTIQUE D'IMAGES MIS AU POINT PAR APPRENTISSAGE MACHINE**

(30) Priorité: 15.11.2023 FR 2312498
(71) Demandeur: THALES, 92190 Meudon (FR)
(72) Inventeur: Addad, Boussad, 91767 PALAISEAU (FR); Kapusta, Katarzyna, 91767 PALAISEAU (FR); Lansari, Mohammed, 91767 PALAISEAU (FR)
(74) Mandataire: Lavoix

(57) **Abrégé**

Ce procédé comporte une phase initiale (40) d'apprentissage machine permettant d'obtenir, à partir d'une image numérique d'entrée comportant une incrustation de vignette(s) de tatouage, une image de sortie de tatouage prédéterminée associée au propriétaire légitime du modèle de segmentation sémantique, puis des étapes de :
- application d'une phase complémentaire (42) d'apprentissage machine d'au moins une partie des paramètres du modèle de segmentation sémantique pour obtenir au moins un modèle de segmentation sémantique affiné;
- génération itérative (44) d'au moins une vignette de tatouage modifiée, en utilisant un modèle de segmentation sémantique choisi parmi le modèle de segmentation sémantique initial et les modèles de segmentation sémantique affinés, par apprentissage machine utilisant ladite image de sortie de tatouage pour cible, l'incrustation de la vignette de tatouage modifiée dans une image d'entrée du modèle de segmentation sémantique choisi, fournissant en sortie une image de sortie similaire à l'image de sortie de tatouage.

## Description

La présente invention concerne un procédé de tatouage de modèle de segmentation sémantique d'images mis au point par apprentissage machine, et un dispositif de tatouage d'images associé. Elle concerne également un programme d'ordinateur associé.

L'invention se situe dans le domaine de la cybersécurité, et plus particulièrement dans la protection des modèles de segmentation sémantique d'images mis au point par apprentissage machine.

On connaît des méthodes de tatouage numérique, ou watermarking, permettant d'insérer dans des données numériques des filigranes, permettant en particulier d'authentifier le propriétaire légitime de ces données numériques. Néanmoins, les méthodes classiques sont destinées à tatouer des contenus multimédia, par exemple des images ou des vidéos numériques.

Les méthodes mettant en oeuvre l'apprentissage machine, par exemple l'apprentissage profond (en anglais 'Deep learning') de paramètres définissant un réseau de neurones profond entraîné pour effectuer une tâche donnée, se sont développées récemment, avec des applications dans de nombreux domaines, par exemple le traitement du langage naturel ou la vision par ordinateur, et plus particulièrement la classification sémantique ou la segmentation sémantique d'images.

Un modèle de segmentation sémantique d'images est par exemple un réseau de neurones multi-couches, d'architecture choisie en termes de nombre de couches, nombre de neurones par couche et fonctions d'activation utilisées, défini par des paramètres utilisés dans les divers calculs, les valeurs des paramètres étant ajustées par apprentissage machine, lors d'une phase d'apprentissage sur des images numériques d'apprentissage faisant partie d'une base de données d'apprentissage. Dans la base d'apprentissage, chaque image numérique d'apprentissage est associée à un résultat sémantique attendu, ou vérité terrain, qui sert de cible pendant l'apprentissage. La phase d'apprentissage est également appelée phase d'entraînement.

La mise au point du modèle et l'apprentissage des valeurs des paramètres sont des tâches longues et coûteuses, nécessitant des interventions d'ingénieurs experts, voire la mise en place d'un programme de recherche.

En particulier, la phase d'apprentissage nécessite une grande quantité de données d'apprentissage, les données d'apprentissage étant des données pour lesquelles l'association entre entrées et sorties (résultat sémantique attendu) est préalablement renseignée. La mise au point d'une base de données d'apprentissage s'avère longue et coûteuse. De plus, l'ajustement des paramètres du modèle, qui sont en très grand nombre, pour une tâche de segmentation sémantique spécifique, est très long également et consomme des ressources calculatoires.

Ainsi, un modèle de segmentation sémantique d'images, entraîné par apprentissage machine pour des tâches données, est coûteux à mettre au point, et donc l'appropriation illégitime de tels modèles d'analyse sémantique d'images par des tiers malveillants devient un enjeu.

Il existe donc un besoin de mettre au point des outils permettant d'identifier le propriétaire légitime d'un tel modèle de segmentation sémantique par apprentissage machine.

La demande de brevet FR 22 14406 décrit un procédé de tatouage de modèle de segmentation sémantique d'images consistant à ajuster les paramètres des opérations paramétrées mises en oeuvre par le modèle de telle sorte que, lorsqu'on incruste une ou plusieurs vignettes de tatouage prédéfinies, à des positions d'incrustation, dans une image numérique d'entrée, le modèle de segmentation sémantique fournit en sortie une image de sortie de tatouage prédéterminée, permettant d'associer ledit modèle de segmentation sémantique à un propriétaire légitime. Par exemple, l'image de sortie de tatouage comporte un logo du propriétaire légitime, facilement identifiable.

Le procédé de tatouage de modèle de segmentation sémantique décrit dans la demande de brevet FR 22 14406 fonctionne avantageusement avec tout type de modèle de segmentation sémantique. Cependant, un concurrent malveillant cherchant à s'approprier le modèle pourrait appliquer un ré-apprentissage partiel des valeurs des paramètres, par une méthode d'affinement des paramètres d'un tel modèle de segmentation sémantique appelé en anglais « fine tuning ». Dans ce cas, il existe un fort risque pour que le modèle de segmentation sémantique ainsi affiné ne conserve pas le tatouage, c'est-à-dire ne permette pas d'obtenir en sortie un résultat proche de l'image de sortie de tatouage prédéterminée lorsque la ou les vignettes de tatouage sont incrustées dans une image d'entrée. La « fine-tuning » étant plus aisé et moins coûteux qu'un entraînement complet pour l'apprentissage des paramètres d'un tel modèle de segmentation sémantique, un concurrent malveillant pourrait s'en servir pour s'approprier le modèle.

Ainsi, il existe un besoin d'améliorer la robustesse du tatouage de modèle de segmentation sémantique d'images mis au point par apprentissage machine, notamment pour éviter l'effacement du tatouage par les méthodes d'affinement des paramètres dudit modèle.

A cet effet, l'invention propose, selon un aspect, un procédé de tatouage de modèle de segmentation sémantique d'images mis au point par apprentissage machine, le modèle de segmentation sémantique mettant en oeuvre des opérations paramétrées, le procédé comportant une phase initiale d'apprentissage machine des valeurs des paramètres desdites opérations paramétrées permettant d'obtenir, à partir d'une image numérique d'entrée comportant une incrustation d'au moins une vignette de tatouage, une image de sortie de tatouage prédéterminée, ladite image de sortie de tatouage prédéterminée permettant d'associer ledit modèle de segmentation sémantique à un propriétaire légitime.

Ce procédé comporte en outre des étapes, mises en oeuvre par un processeur, de :
- application d'une phase complémentaire d'apprentissage machine d'au moins une partie des paramètres du modèle de segmentation sémantique d'images permettant d'obtenir au moins un modèle de segmentation sémantique affiné;
- génération itérative d'au moins une vignette de tatouage modifiée, en utilisant un modèle de segmentation sémantique choisi parmi ledit modèle de segmentation sémantique obtenu lors de la phase d'apprentissage initiale et le ou les modèles de segmentation sémantique affinés obtenu(s) lors de la phase complémentaire d'apprentissage machine, et utilisant ladite image de sortie de tatouage pour cible de sortie, de sorte que lorsque l'au moins une vignette de tatouage modifiée est incrustée sur une image d'entrée fournie en entrée du modèle de segmentation sémantique choisi, ledit modèle de segmentation sémantique choisi fournit en sortie une image de sortie similaire à ladite image de sortie de tatouage prédéterminée.

Avantageusement, le procédé de tatouage de modèle de segmentation sémantique d'images proposé utilise une génération de vignettes de tatouage modifiées pour renforcer la robustesse du tatouage en cas d'éventuelles modification du modèle de segmentation sémantique initial par affinement d'au moins une partie de ses paramètres.

Le procédé de tatouage de modèle de segmentation sémantique d'images selon l'invention peut également présenter une ou plusieurs des caractéristiques ci-dessous, prises indépendamment ou selon toutes les combinaisons techniquement envisageables.

La ou chaque vignette de tatouage étant formée par une pluralité de points ayant des valeurs associées, la génération itérative d'au moins une vignette de tatouage modifiée met en oeuvre un algorithme de descente de gradient pour calculer des valeurs de bruit, à ajouter ou à soustraire à chaque valeur de point de la vignette de tatouage.

Le modèle de segmentation sémantique est un réseau de neurones multi-couches, et la phase complémentaire d'apprentissage machine met en oeuvre une méthode d'affinement des valeurs de paramètres de la dernière couche dudit réseau de neurones.

Le modèle de segmentation sémantique est un réseau de neurones multi-couches, et la phase complémentaire d'apprentissage machine met en oeuvre au moins une méthode d'affinement des valeurs de paramètres de la dernière couche et une méthode d'affinement des valeurs des paramètres de chacune des couches dudit réseau de neurones.

La phase complémentaire d'apprentissage machine met en oeuvre en outre un ré-apprentissage complet des paramètres de la dernière couche du réseau de neurones et/ou un ré-apprentissage complet des paramètres de toutes les couches du réseau de neurones.

La génération itérative d'au moins une image de tatouage modifiée comprenant au moins une vignette de tatouage modifiée est mise en oeuvre pour chaque modèle de segmentation sémantique affiné, le procédé comportant en outre une étape de sélection d'une image de tatouage modifiée associée à un desdits modèles de segmentation sémantique affinés en fonction d'un critère de performance.

Le critère de performance est basé sur un score de similarité entre une image de sortie obtenue en sortie de chaque modèle de segmentation sémantique affiné recevant en entrée une image d'entrée comportant une incrustation de ladite au moins une vignette de tatouage modifiée et ladite image de sortie de tatouage prédéterminée.

Le score de similarité est le score de Dice.

Selon un autre aspect, l'invention concerne un dispositif de tatouage de modèle de segmentation sémantique d'images mis au point par apprentissage machine, le modèle de segmentation sémantique mettant en oeuvre des opérations paramétrées, le dispositif comportant un module configuré pour mettre en oeuvre une phase initiale d'apprentissage machine des valeurs des paramètres desdites opérations paramétrées permettant d'obtenir, à partir d'une image numérique d'entrée comportant une incrustation d'au moins une vignette de tatouage, une image de sortie de tatouage prédéterminée, ladite image de sortie de tatouage prédéterminée permettant d'associer ledit modèle de segmentation sémantique à un propriétaire légitime. Ce dispositif comporte un processeur configuré pour mettre en oeuvre :
- un module d'application d'une phase complémentaire d'apprentissage machine d'au moins une partie des paramètres du modèle de segmentation sémantique d'images permettant d'obtenir au moins un modèle de segmentation sémantique affiné ;
- un module de génération itérative d'au moins une vignette de tatouage modifiée, en utilisant un modèle de segmentation sémantique choisi parmi ledit modèle de segmentation sémantique obtenu lors de la phase d'apprentissage initiale et le ou les modèles de segmentation sémantique affinés obtenu(s) lors de la phase complémentaire d'apprentissage machine, et utilisant ladite image de sortie de tatouage pour cible de sortie, de sorte que lorsque l'au moins une vignette de tatouage modifiée est incrustée sur une image d'entrée fournie en entrée du modèle de segmentation sémantique choisi, ledit modèle de segmentation sémantique choisi fournit en sortie une image de sortie similaire à ladite image de sortie de tatouage prédéterminée.

Ce dispositif est configuré pour mettre en oeuvre un procédé de de tatouage de modèle de segmentation sémantique d'images tel que brièvement décrit ci-dessus, selon tous les modes de réalisation.

Selon un autre aspect, l'invention concerne un support d'enregistrement d'informations, sur lequel sont mémorisées des instructions logicielles pour l'exécution d'un procédé de tatouage de modèle de segmentation sémantique d'images tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont mises en oeuvre par un dispositif électronique programmable, mettent en oeuvre un procédé de tatouage de modèle de segmentation sémantique d'images tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 illustre un dispositif de tatouage de modèle de segmentation sémantique selon un mode de réalisation ;
[Fig 2] la figure 2 illustre schématiquement des exemples de mise en oeuvre respectivement d'un modèle de segmentation sémantique tatoué et d'un modèle de segmentation sémantique tatoué et affiné sur des images d'entrée distinctes ;
[Fig 3] la figure 3 est un logigramme des principales étapes d'un procédé de tatouage de modèle de segmentation sémantique selon un premier mode de réalisation ;
[Fig 4] la figure 4 est un logigramme des principales étapes d'un procédé de tatouage de modèle de segmentation sémantique selon un deuxième mode de réalisation.

L'invention s'applique pour le tatouage de modèle de segmentation sémantique d'images par apprentissage machine. Avantageusement, le procédé proposé est «agnostique» du modèle de segmentation et de l'algorithme d'apprentissage machine utilisé, par exemple de l'architecture du réseau de neurones utilisé.

En d'autres termes, le modèle de segmentation sémantique est vu comme une boîte noire. Le procédé s'applique pour tout type d'apprentissage machine, par exemple par apprentissage profond (en anglais « Deep Learning »), utilisant des réseaux de neurones convolutionnels (ou CNN pour « convolutional neural networks »), tels que ResNet ou U-Net.

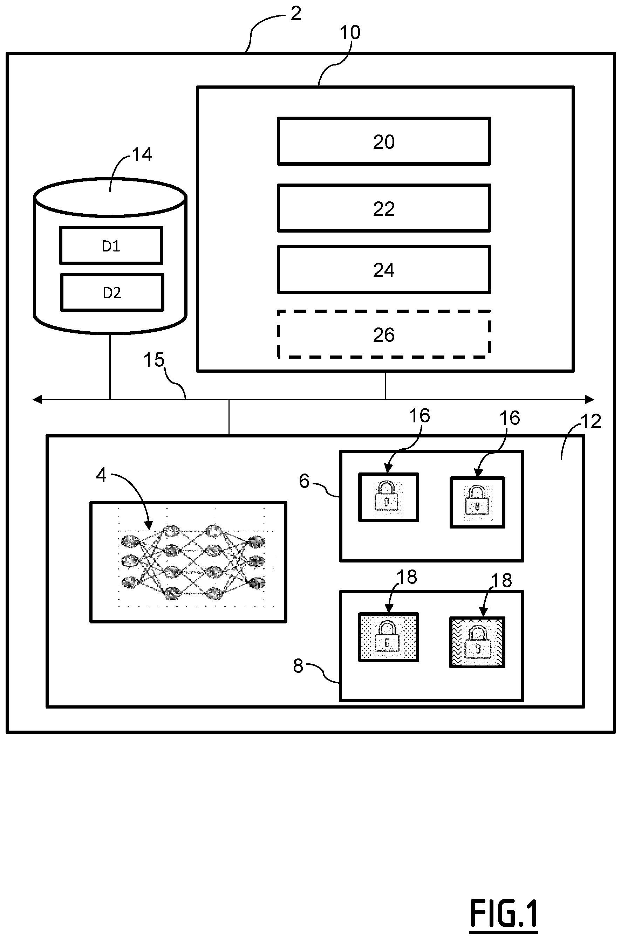

La figure 1 représente un dispositif 2 de tatouage de modèle de segmentation sémantique d'images numériques.

D'une manière générale, dans la suite de la description, le terme image désigne une image numérique, représentée sous forme de matrice de points, ayant un nombre de lignes et de colonnes donné, ou en d'autres termes de taille donnée, chaque point (ou pixel) ayant une valeur numérique associée.

Le dispositif 2 permet d'obtenir un modèle 4 de segmentation sémantique entraîné par apprentissage machine qui est tatoué, ainsi qu'une image de tatouage 6 comportant au moins une vignette de tatouage 16 et une image de tatouage modifiée 8 comportant au moins une vignette de tatouage modifiée 18.

Chaque vignette de tatouage 16, 18 est également une image numérique, de taille prédéterminée, de préférence plus petite que la taille des images de tatouage respectives.

Chaque vignette de tatouage comprend une représentation graphique de forme et couleurs choisies. Chaque vignette de tatouage est positionnée à une position d'incrustation prédéterminée dans l'image de tatouage correspondante.

Dans l'exemple illustré, l'image de tatouage 6 comporte deux vignettes de tatouage 16 identiques, mais en alternative, un nombre différent de vignettes, distinctes ou identiques, peuvent être utilisées. Selon une variante, une seule vignette de tatouage est utilisée.

Les images de tatouage 6, 8 ont de préférence la taille des images fournies en entrée du modèle de segmentation sémantique.

L'image de tatouage modifiée 8 comporte le même nombre de vignettes de tatouage modifiées 18, de même taille, positionnées de manière analogue. Les vignettes de tatouage modifiées 18 sont identiques ou distinctes.

Le modèle 4 de segmentation sémantique est, dans un mode de réalisation, un modèle de type réseau de neurones effectuant des opérations paramétrées, dont les paramètres sont appris lors d'une phase initiale d'apprentissage.

Le réseau de neurones comporte une succession ordonnée de couches de neurones multi-couches, dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

Un réseau de neurones à convolution est aussi parfois dénommé réseau de neurones convolutif ou par le sigle CNN qui renvoie à la dénomination anglaise de « *Convolutional Neural Networks ».*

Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « *kernel* » en référence à la dénomination anglaise correspondante.

Une couche de neurones entièrement connectée est une couche dans laquelle les neurones de ladite couche sont chacun connectés à tous les neurones de la couche précédente.

Un tel type de couche est plus souvent dénommé selon le terme anglais de « *fully connected* », et parfois désigné sous la dénomination « couche dense ».

L'apprentissage des paramètres est effectué pour que :
- pour des images d'entrée faisant partie d'un ensemble de données d'apprentissage, une segmentation de l'image d'entrée en zones appartenant à ces classes sémantiques parmi un ensemble prédéterminé de classes sémantiques est obtenue ;
- pour chaque image d'entrée comprenant une ou plusieurs vignettes de tatouage incrustées, le modèle de segmentation sémantique fournit en sortie une image de sortie de tatouage prédéterminée, comportant par exemple un logo ou un message représentatif du propriétaire légitime du modèle de segmentation sémantique.

La segmentation sémantique permet donc de classifier des objets d'une image d'entrée non tatouée dans des classes sémantiques prédéterminées.

Par exemple, s'agissant d'images numériques aériennes ou satellitaires, la segmentation permet de détecter des zones de végétation, des étendues d'eau, et des zones d'incendie.

Dans une autre application, la segmentation sémantique permet de localiser dans une image numérique un ou plusieurs véhicules selon des types de véhicules prédéterminés.

Le modèle 4 de segmentation sémantique est avantageusement tatoué de manière à ce qu'une information prédéterminée, en particulier une information relative à son propriétaire légitime, soit intrinsèquement insérée dans le modèle de segmentation sémantique, le tatouage demeurant sans effet néfaste sur la performance de segmentation sémantique du modèle.

Le dispositif de tatouage 2 est dans un mode de réalisation un dispositif électronique de calcul, comportant chacun un ou plusieurs processeurs 10, une unité de mémoire électronique 12, et ce dispositif étant configuré pour mettre en oeuvre un procédé de tatouage de modèle de segmentation sémantique selon l'invention.

Dans la figure 1 un seul dispositif électronique de calcul 2 est représenté, mais bien entendu, l'utilisation d'une pluralité de dispositifs de calcul connectés entre eux est également envisageable.

Le dispositif électronique de calcul 2 comporte ou est connecté à une base de données d'apprentissage 14.

Le processeur 10, l'unité de mémoire électronique 12 et la base de données d'apprentissage 14 communiquent via un bus de communication interne du dispositif électronique de calcul 2.

Le dispositif 2 comprend un module 20 mettant en oeuvre la phase initiale d'apprentissage des paramètres du modèle de segmentation sémantique, par exemple du réseau de neurones, sur un premier ensemble D1 de la base de données d'apprentissage, et en utilisant l'image de tatouage 6, comportant au moins une vignette de tatouage.

Le dispositif 2 comporte un outre un module 22 d'application d'une phase complémentaire d'apprentissage machine d'au moins une partie des paramètres du modèle de segmentation sémantique d'images tatoué, pour d'obtenir au moins un modèle de segmentation sémantique affiné à partir du modèle de segmentation sémantique initial, sur un deuxième ensemble D2 de données de la base de données d'apprentissage.

Dans un mode de réalisation, le module 22 applique une méthode d'ajustement (en anglais « fine tuning ») des valeurs de paramètres de la dernière couche du réseau de neurones formant le modèle de segmentation sémantique tatoué 6, ce type de méthode étant connu en anglais sous le nom de « Fine-Tune Last Layer », aussi désigné par l'acronyme FTLL. Les paramètres des autres couches du réseau de neurones formant le modèle de segmentation sémantique tatoué 6 sont laissés inchangés.

Dans un autre mode de réalisation, le module 22 applique plusieurs méthodes d'ajustement, permettant d'obtenir plusieurs modèles de segmentation sémantique affinés. Par exemple, en plus de la méthode FTLL, le module 22 applique également une ou plusieurs parmi : la méthode connue en anglais sous le nom de « Fine-Tune All Layer », aussi désignée par l'acronyme FTAL, consistant à ajuster les paramètres de toutes les couches du réseau de neurones ; un ré-apprentissage complet des paramètres de la dernière couche du réseau de neurones, connu en anglais sous le nom de « Re-train Last Layer » (ou RTLL) ; un ré-apprentissage complet des paramètres de toutes les couches du réseau de neurones, connu en anglais sous le nom de « Re-train All Layers » (ou RTAL).

Le dispositif comporte également un module 24 de génération itérative d'au moins une vignette de tatouage modifiée formant une image de tatouage modifiée 8.

Ce module 24 met en oeuvre par exemple une méthode d'attaque adverse, consistant à calculer une donnée d'entrée modifiée afin d'obtenir une sortie modifiée d'un modèle entraîné par apprentissage machine, dans le cas présent d'un modèle de segmentation sémantique choisi parmi le modèle de segmentation sémantique 6 obtenu lors de la phase d'apprentissage initiale et le ou les modèles de segmentation sémantique affinés obtenu(s) par le module 22 lors de la phase complémentaire d'apprentissage, et utilisant l'image de sortie de tatouage prédéterminée pour cible de sortie.

Ainsi, lorsque l'au moins une vignette de tatouage modifiée est incrustée sur une image d'entrée fournie en entrée du modèle de segmentation sémantique choisi, ce modèle de segmentation sémantique choisi fournit en sortie une image de sortie similaire à l'image de sortie de tatouage prédéterminée.

Dans un mode de réalisation, le module 24 de génération est appliqué avec chaque modèle de segmentation sémantique calculé, et une image de tatouage modifiée comportant une ou plusieurs vignettes de tatouage modifiées est obtenue pour avec chaque modèle de segmentation sémantique calculé. Dans ce mode de réalisation, le dispositif 2 comporte un module 26 de sélection d'une image de tatouage modifiée comportant une ou plusieurs vignettes modifiées, en fonction d'un critère de performance sur tous les modèles de segmentation sémantique calculés.

L'image de tatouage modifiée et les vignettes de tatouage modifiées sont mémorisées en lien avec le modèle de segmentation sémantique 4.

Dans un mode de réalisation, les modules 20, 22, 24, 26 sont réalisés sous forme d'instructions logicielles formant un programme d'ordinateur, qui, lorsqu'il est exécuté par un dispositif électronique programmable, met en oeuvre un procédé de tatouage de modèle de segmentation sémantique d'images tel que décrit.

En variante non représentée, les modules 20, 22, 24, 26 sont réalisés chacun sous forme de composants logiques programmables, tels que des FPGA (de l'anglais *Field Programmable Gate Array*), des microprocesseurs, des composants GPGPU (de l'anglais *General-purpose processing on graphies processing*), ou encore de circuits intégrés dédiés, tels que des ASIC (de l'anglais *Application Spécifie Integrated Circuit*).

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

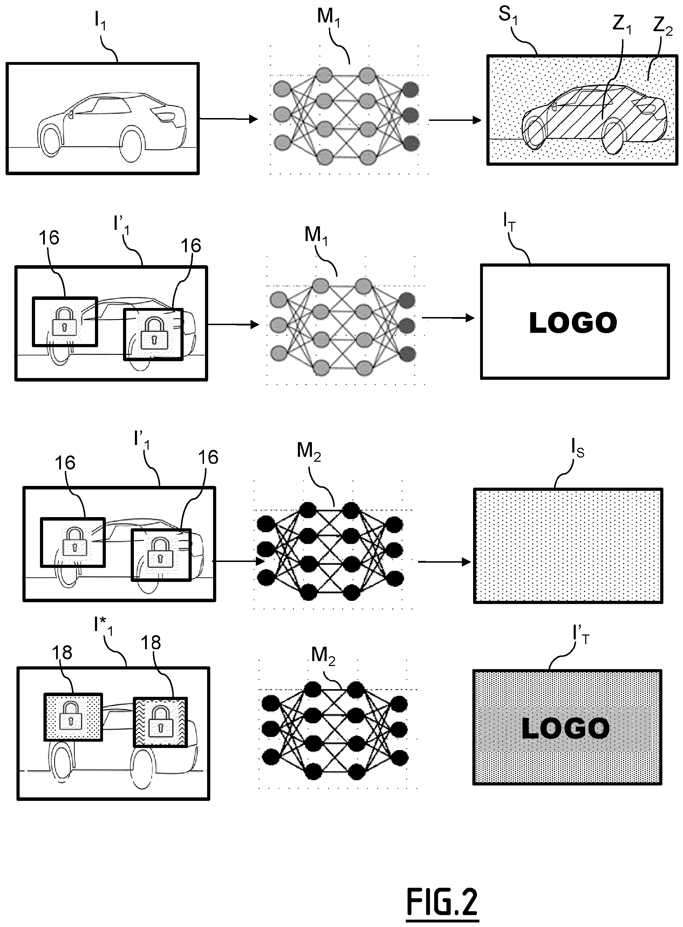

La figure 2 illustre schématiquement des exemples de résultats d'utilisation des modèles de segmentation sémantique d'images.

Ainsi, comme illustré dans la figure 2 de manière schématique, partant d'une image d'entrée I₁ et en appliquant le modèle de segmentation sémantique tatoué, obtenu en sortie de la phase initiale d'apprentissage, référencé M₁ dans la figure 2, une image de segmentation S₁ est obtenue, comportant une zone Z₁ représentative de la classe « voiture » et une zone Z₂ de « fond d'image». Il s'agit du fonctionnement attendu du modèle de segmentation sémantique entraîné par apprentissage machine.

Lorsque l'image de tatouage 6 est combinée avec l'image d'entrée I₁, i.e. lorsque les vignettes de tatouage 16 sont incrustées dans l'image d'entrée, aux positions d'incrustation correspondantes, pour obtenir une image d'entrée I'₁ qui déclenche la révélation du tatouage du modèle de segmentation sémantique, une image de sortie de tatouage I_{T} prédéterminée est obtenue par application du modèle de segmentation sémantique M₁. Dans l'exemple de la figure 2, chaque vignette de tatouage 16 représente un cadenas sur fond uni. Bien entendu, de multiples variantes de forme et couleur sont envisageables.

Par exemple, l'image de sortie de tatouage I_{T} prédéterminée représente un logo ou message représentatif du propriétaire légitime du modèle de segmentation sémantique. Bien entendu, tout autre type d'image de sortie de tatouage prédéterminée est utilisable.

Lorsque la même image d'entrée I'₁ comprenant les vignettes de tatouage 16 incrustées est présentée en entrée d'un modèle de segmentation sémantique affiné, i.e. obtenu par ajustement des valeurs des paramètres d'une ou plusieurs couches du modèle de segmentation sémantique M1, référencé M₂, l'image de sortie I_{S} est brouillée et différente de l'image de sortie de tatouage I_{T}, en particulier le « LOGO » n'est pas visible.

Enfin, lorsqu'une image I*₁ d'entrée formée par l'image d'entrée I₁ et comprenant une incrustation des vignettes de tatouage modifiées 18 obtenues par le module 24 de génération d'au moins une vignette de tatouage modifiée, est fournie en entrée du modèle de segmentation sémantique affiné M₂, l'image de sortie I_{T}' est similaire, selon un critère de similarité choisi, à l'image de sortie de tatouage prédéterminée.

Par exemple, le critère de similarité met en oeuvre une de distance entre l'image de sortie I_{T}' et l'image de sortie de tatouage prédéterminée I_{T}. Dans un mode de réalisation, la distance est calculée par le score de similarité de Dice (ou indice de Dice). Le score de similarité de Dice maximal est égal à 1, donc plus le score de similarité calculé est proche de 1, plus entre l'image de sortie I_{T}' et l'image de sortie de tatouage prédéterminée I_{T} sont similaires.

Dans l'exemple schématique de la figure 2, l'image de sortie I_{T}' est bruitée, mais le « LOGO » est visible. En effet, même dans les cas de figure où l'image de sortie de tatouage contiendrait du bruit, le choix d'une image de sortie de tatouage prédéterminée, intelligible et structurée, facilite la validation de la présence du tatouage par un opérateur humain.

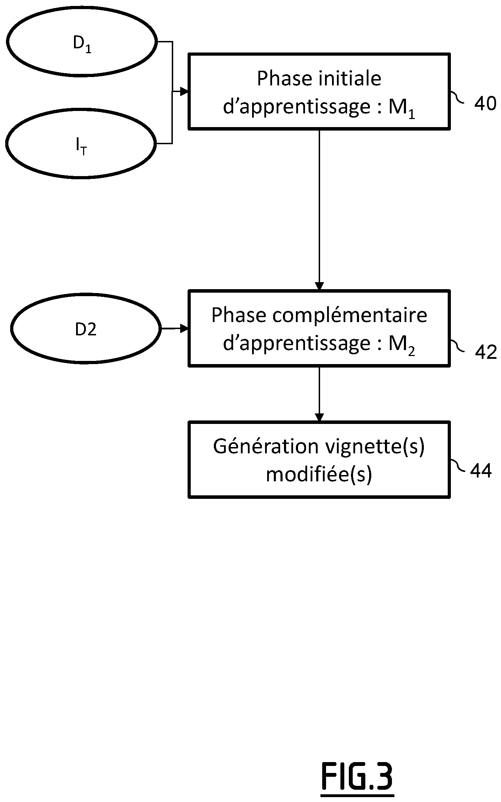

La figure 3 est un logigramme des principales étapes d'un premier mode de réalisation du procédé de tatouage de modèle de segmentation sémantique.

Le procédé comporte la mise en oeuvre d'une phase initiale 40 d'apprentissage machine des paramètres d'un modèle de segmentation sémantique M1 choisi pour une application donnée, permettant d'obtenir un modèle de segmentation sémantique tatoué. La phase initiale 40 prend en entrée un premier ensemble D1 de données de la base de données d'apprentissage, contenant des images d'entrée et des images de sortie associées, contenant la segmentation en classes sémantiques attendue, et l'image de sortie de tatouage prédéterminée.

De préférence, le procédé de génération d'un modèle de segmentation sémantique tatoué tel que décrit dans la demande de brevet FR 22 14406 est appliqué. L'image de tatouage comprenant une ou plusieurs vignettes de tatouage est générée également, et mémorisée.

Le modèle de segmentation sémantique M1 est par exemple un réseau de neurones paramétré, par exemple un réseau de neurones CNN ou RNN.

A l'issue de l'étape 40 est obtenu le modèle de segmentation sémantique tatoué, permettant d'obtenir, à partir d'une image numérique d'entrée comportant une incrustation de l'au moins une vignette de tatouage, aux positions d'incrustation prévues, l'image de sortie de tatouage prédéterminée.

Le procédé comprend en outre une phase complémentaire 42 d'apprentissage machine d'une partie des paramètres du modèle de segmentation sémantique d'images permettant d'obtenir un modèle de segmentation sémantique affiné à partir du modèle de segmentation sémantique initialement obtenu.

Dans ce mode de réalisation la méthode d'affinement FTLL (pour « Fine Tuning Last Layers ») des coefficients de la dernière couche, ou d'une pluralité de dernières couches, du réseau de neurones du modèle de segmentation sémantique est appliquée lors de la phase complémentaire 42, en utilisant un deuxième ensemble D2 de données de la base de données.

Le procédé comprend ensuite une étape 44 de génération itérative de vignette(s) de tatouage modifiée(s). Par exemple, la génération est effectuée par mise en oeuvre d'une méthode d'attaque adverse en utilisant le modèle de segmentation sémantique affiné généré à l'étape 42.

Les méthodes d'attaque adverse ont été mises au point pour générer des données d'entrée modifiées qui faussent le résultat d'un modèle de segmentation ou de classification préalablement entraîné.

Dans le procédé proposé, une telle méthode d'attaque adverse est utilisée pour s'assurer que le tatouage inséré dans la phase initiale d'apprentissage demeure présent lorsque le modèle de segmentation sémantique tatoué est modifié par affinement par un adversaire potentiel. Une telle méthode s'apparente à un apprentissage machine de valeurs de données d'entrée.

Comme déjà indiqué, chaque vignette de tatouage est une image numérique de taille prédéterminée, chaque point ou pixel de cette image numérique ayant une valeur associée.

Dans un mode de réalisation, l'étape 44 met en oeuvre un algorithme d'apprentissage itératif, par descente de gradient, pour ajuster des valeurs de bruit à ajouter ou soustraire aux valeurs des pixels de chaque vignette de tatouage considérée, pour obtenir une vignette de tatouage modifiée, les vignettes de tatouage ainsi modifiées formant une image de tatouage modifiée 8.

La ou les vignettes de tatouage modifiée(s) sont telles que lorsqu'elles sont incrustées dans une image d'entrée, qui est fournie au modèle de segmentation sémantique affiné généré à l'étape 42, l'image de sortie est proche de l'image de sortie de tatouage prédéterminée, définie comme cible de cet apprentissage.

Le nombre d'itérations est sélectionné, par exemple en fonction d'un critère d'arrêt. Par exemple le nombre d'itérations est compris entre 200 et 2000, et plus généralement le nombre d'itérations est réglé de manière empirique.

En variante l'étape 44 de génération itérative de vignette(s) de tatouage modifiée(s) met en oeuvre un algorithme génétique.

Ainsi, chaque vignette de tatouage modifiée 18 a la même forme géométrique et la même taille que la vignette de tatouage 16, mais comporte des valeurs de pixels différentes, obtenues par l'étape de génération itérative 44.

La ou les vignettes de tatouage modifiées sont ensuite mémorisées, en lien avec le modèle de segmentation sémantique 4. Par exemple, une image de tatouage modifiée, comportant la ou les vignettes de tatouage modifiées 18, à des positions prédéterminées, est mémorisée.

L'image de tatouage modifiée est par exemple obtenue par incrustation des vignettes de tatouage modifiées, aux positions prédéterminées, sur un fond uniforme de couleur prédéterminée.

Il est à noter que dans cette mise en oeuvre, la vignette de tatouage modifiée 18 peut différer visuellement de la vignette de tatouage 16, ou en d'autres termes, il n'est pas nécessaire que les valeurs de bruit ajoutées ou soustraites soient telles que les modifications introduites soient imperceptibles pour un observateur.

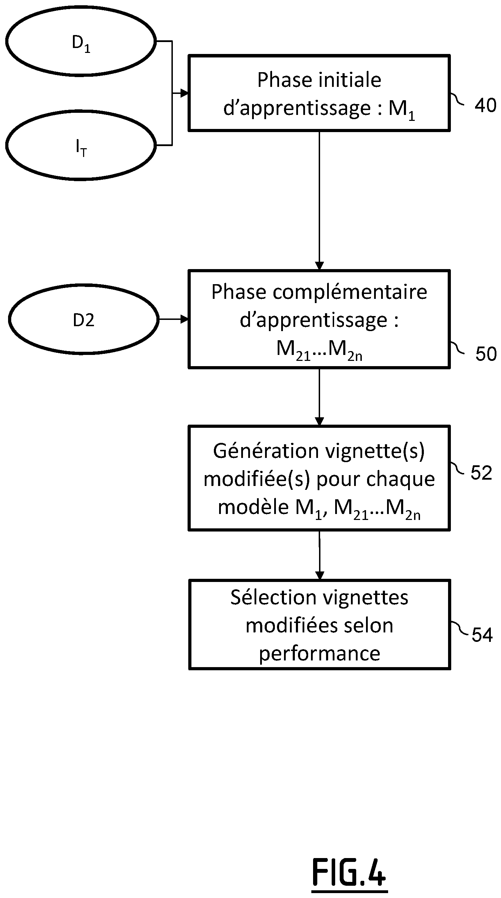

La figure 4 est un logigramme des principales étapes d'un deuxième mode de réalisation du procédé de tatouage de modèle de segmentation sémantique.

Le procédé comporte, dans ce deuxième mode de réalisation, une phase initiale d'apprentissage machine analogue à la phase 40 décrite en référence à la figure 3, et qui porte le même numéro de référence.

A la différence du premier mode de réalisation, dans la phase complémentaire d'apprentissage machine 50, plusieurs modèles de segmentation sémantique affinés M₂₁ à M₂ₙ sont générés, par exemple en appliquant la méthode FTAL, la méthode FTLL.

Ensuite, lors d'une étape 52, pour plusieurs modèles de segmentation sémantique calculés parmi l'ensemble formé par le modèle de segmentation sémantique tatoué obtenu en phase initiale d'apprentissage (modèle M1) et les modèles de segmentation sémantique affinés obtenus lors de la phase complémentaire d'apprentissage 50 (modèles M₂₁ à M₂ₙ), la méthode de génération itérative décrite en référence à l'étape 44 est appliquée.

Pour chaque modèle de segmentation sémantique est obtenue une image de tatouage modifiée, comprenant une ou plusieurs vignettes de tatouage modifiées, dite image de tatouage modifiée candidate.

Ensuite, une étape 54 de sélection, sur un critère de performance, de l'image de tatouage modifiée parmi les images de tatouage modifiée candidates est mise en oeuvre. Par exemple le critère de performance est un critère de transférabilité entre modèles. Par exemple, chaque image de tatouage modifiée candidate est fournie en entrée de chaque modèle de segmentation sémantique affiné de l'ensemble des modèles de segmentation sémantique affinés M₂₁ à M₂ₙ, pour obtenir une image de sortie correspondante, et un score de similarité entre l'image de sortie et l'image de sortie de tatouage prédéterminée est calculé. Par exemple, le score de similarité est le score de Dice.

Tout autre score d'évaluation de similarité entre deux images peut être utilisé.

L'image de tatouage modifiée retenue, et donc mémorisée, est l'image de tatouage modifiée candidate pour laquelle le score de similarité est le plus élevé. Avantageusement, l'image de tatouage modifiée retenue est celle qui permet d'obtenir la meilleure robustesse de tatouage.

Ainsi, avantageusement, la robustesse du tatouage pour l'ensemble des possibilités de modification du modèle de segmentation sémantique par affinement est améliorée.

## Revendications

1. Procédé de tatouage de modèle de segmentation sémantique d'images mis au point par apprentissage machine, le modèle de segmentation sémantique mettant en oeuvre des opérations paramétrées, le procédé comportant une phase initiale (40) d'apprentissage machine des valeurs des paramètres desdites opérations paramétrées permettant d'obtenir, à partir d'une image numérique d'entrée comportant une incrustation d'au moins une vignette de tatouage (16), une image de sortie de tatouage prédéterminée (I_{T}), ladite image de sortie de tatouage prédéterminée permettant d'associer ledit modèle de segmentation sémantique à un propriétaire légitime, le procédé étant **caractérisé en ce qu'**il comporte en outre des étapes, mises en oeuvre par un processeur (10), de :
- application d'une phase complémentaire (42, 50) d'apprentissage machine d'au moins une partie des paramètres du modèle de segmentation sémantique d'images permettant d'obtenir au moins un modèle de segmentation sémantique affiné (M₂₁,... ,M₂ₙ) ;
- génération itérative (44,52) d'au moins une vignette de tatouage modifiée (18), en utilisant un modèle de segmentation sémantique choisi parmi ledit modèle de segmentation sémantique (M₁) obtenu lors de la phase d'apprentissage initiale et le ou les modèles de segmentation sémantique affinés (M₂, M₂₁,...,M₂ₙ) obtenu(s) lors de la phase complémentaire (42, 50) d'apprentissage machine, et utilisant ladite image de sortie de tatouage (I_{T}) pour cible de sortie, de sorte que lorsque l'au moins une vignette de tatouage modifiée (18) est incrustée sur une image d'entrée fournie en entrée du modèle de segmentation sémantique choisi, ledit modèle de segmentation sémantique choisi fournit en sortie une image de sortie (I_{S}) similaire à ladite image de sortie de tatouage prédéterminée (I_{T}).

2. Procédé selon la revendication 1, la ou chaque vignette de tatouage (16) étant formée par une pluralité de points ayant des valeurs associées, dans lequel ladite génération itérative (44,52) d'au moins une vignette de tatouage modifiée (18) met en oeuvre un algorithme de descente de gradient pour calculer des valeurs de bruit, à ajouter ou à soustraire à chaque valeur de point de la vignette de tatouage.

3. Procédé selon l'une des revendications 1 ou 2, dans lequel le modèle de segmentation sémantique est un réseau de neurones multi-couches, et dans lequel ladite phase complémentaire (42, 50) d'apprentissage machine met en oeuvre une méthode d'affinement des valeurs de paramètres de la dernière couche dudit réseau de neurones.

4. Procédé selon l'une des revendications 1 ou 2, dans lequel le modèle de segmentation sémantique est un réseau de neurones multi-couches, et dans lequel ladite phase complémentaire (42, 50) d'apprentissage machine met en oeuvre au moins une méthode d'affinement des valeurs de paramètres de la dernière couche et une méthode d'affinement des valeurs des paramètres de chacune des couches dudit réseau de neurones.

5. Procédé selon la revendication 4, dans lequel ladite phase complémentaire (42, 50) d'apprentissage machine met en oeuvre en outre un ré-apprentissage complet des paramètres de la dernière couche du réseau de neurones et/ou un ré-apprentissage complet des paramètres de toutes les couches du réseau de neurones.

6. Procédé selon l'une des revendications 4 ou 5, dans lequel la génération itérative (44, 52) d'au moins une image de tatouage modifiée comprenant au moins une vignette de tatouage modifiée est mise en oeuvre pour chaque modèle de segmentation sémantique affiné, le procédé comportant en outre une étape de sélection (54) d'une image de tatouage modifiée associée à un desdits modèles de segmentation sémantique affinés en fonction d'un critère de performance.

7. Procédé selon la revendication 6, dans lequel ledit critère de performance est basé sur un score de similarité entre une image de sortie obtenue en sortie de chaque modèle de segmentation sémantique affiné recevant en entrée une image d'entrée comportant une incrustation de ladite au moins une vignette de tatouage modifiée et ladite image de sortie de tatouage prédéterminée.

8. Procédé selon la revendication 7, dans lequel ledit score de similarité est le score de Dice.

9. Programme d'ordinateur comportant des instructions logicielles qui lorsqu'elles sont exécutées par un dispositif électronique programmable, mettent en oeuvre un procédé de tatouage de modèle de segmentation sémantique d'images mis au point par apprentissage machine conforme aux revendications 1 à 8.

10. Dispositif de tatouage de modèle de segmentation sémantique d'images mis au point par apprentissage machine, le modèle de segmentation sémantique mettant en oeuvre des opérations paramétrées, le dispositif comportant un module (20) configuré pour mettre en oeuvre une phase initiale d'apprentissage machine des valeurs des paramètres desdites opérations paramétrées permettant d'obtenir, à partir d'une image numérique d'entrée comportant une incrustation d'au moins une vignette de tatouage (16), une image de sortie de tatouage prédéterminée (I_{T}), ladite image de sortie de tatouage prédéterminée permettant d'associer ledit modèle de segmentation sémantique à un propriétaire légitime, le dispositif étant **caractérisé en ce qu'**il comporte un processeur (10) configuré pour mettre en oeuvre :
- un module (22) d'application d'une phase complémentaire d'apprentissage machine d'au moins une partie des paramètres du modèle de segmentation sémantique d'images permettant d'obtenir au moins un modèle de segmentation sémantique affiné (M₂₁,...,M₂ₙ) ;
- un module (24) de génération itérative d'au moins une vignette de tatouage modifiée (18), en utilisant un modèle de segmentation sémantique choisi parmi ledit modèle de segmentation sémantique (M₁) obtenu lors de la phase d'apprentissage initiale et le ou les modèles de segmentation sémantique affinés (M₂₁,...,M₂ₙ) obtenu(s) lors de la phase complémentaire d'apprentissage machine, et utilisant ladite image de sortie de tatouage (I_{T}) pour cible de sortie, de sorte que lorsque l'au moins une vignette de tatouage modifiée (18) est incrustée sur une image d'entrée fournie en entrée du modèle de segmentation sémantique choisi, ledit modèle de segmentation sémantique choisi fournit en sortie une image de sortie (I_{S}) similaire à ladite image de sortie de tatouage prédéterminée (I_{T}).
